# EUROPÄISCHE PATENTSCHRIFT

(11) **EP 1 347 896 B1**
(45) Veröffentlichungstag und Bekanntmachung des Hinweises auf die Patenterteilung: **13.12.2006**
(21) Anmeldenummer: 01956314.7
(22) Anmeldetag: 11.07.2001
(51) Int. Cl.: B60S 1/40

(54) **WISCHVORRICHTUNG, INSBESONDERE FÜR SCHEIBEN VON KRAFTFAHRZEUGEN**
WIPER DEVICE, ESPECIALLY FOR WINDSHIELDS OF AUTOMOBILES
DISPOSITIF D'ESSUIE-GLACE, EN PARTICULIER POUR VITRES DE VEHICULES AUTOMOBILES

(30) Priorität: 23.12.2000 DE 10065014
(43) Veröffentlichungstag der Anmeldung: 01.10.2003
(73) Patentinhaber: ROBERT BOSCH GMBH, 70442 Stuttgart (DE)
(72) Erfinder: DE BLOCK, Peter, B-3545 Halen (BE)
(86) Internationale Anmeldenummer: PCT/DE2001/002598
(87) Internationale Veröffentlichungsnummer: WO 2002/051677

(56) Entgegenhaltungen:
- DE-A- 2 313 689
- DE-B- 1 028 896
- US-A- 3 147 507

## Beschreibung

### Stand der Technik

Zu einer Wischvorrichtung gemäß der Erfindung gehören neben dem angetriebenen Wischerarm auch das an dessen einen, freien Ende zu befestigende Wischblatt. Die dazu erforderliche Anschlußvorrichtung hat sowohl armseitig als auch blattseitig entsprechend ausgebildete, miteinander korrespondierende Kupplungsmittel.

Die Erfindung geht aus von einer Wischvorrichtung nach der Gattung des Anspruchs 1. Bei einer bekannten Wischvorrichtung dieser Art (DE 23 13 689 A1) hat das zur Wischvorrichtung gehörende Wischblatt bzw. dessen Kupplungsteil einen zu einem Grundkörper der Wischleiste hin offenen Führungskanal, in dem eine haarnadelförmige Sicherungsfeder zwischen einer Montageposition und einer Verriegelungsposition verschiebbar ist. Diese Sicherungsfeder dient zum Öffnen bzw. zum Verschließen einer in dem Kupplungsteil angeordneten Ausnehmung, welche die Lagerausnehmung für den Wischerarm-Gelenkbolzen darstellt. Die Sicherungsfeder ist zu einem Gummi-Grundkörper der Wischleiste hin vorgespannt, so daß zum Verschieben der Feder die Reibung zwischen Gummi und Feder überwunden werden muß. Einerseits soll die Verschiebbarkeit der Feder für den Benutzer, beispielsweise beim Wischblatt-Tausch, leichtgängig sein, andererseits muß die Feder aber während des Wischbetriebs zuverlässig die Lagerausnehmung in der Kanalwand verschließen, damit sich das Wischblatt nicht unbeabsichtigt vom Wischerarm lösen kann. Diese beiden einander gegenüberstehenden Forderungen können nicht gleichermaßen zufriedenstellend ausgeführt werden.

Bei einer anderen, diesen Mangel nicht aufweisenden Wischvorrichtung (DE-PS 10 28 896) ist ein wischblattseitiges Kupplungsteil einstückig an die gummielastische Wischleiste angeformt. Das Kupplungsteil hat eine bohrungsartige Lageraufnahme für einen armseitigen Gelenkbolzen, welcher über einen elastisch aufweitbaren Montageschlitz quer zu seiner Längsachse in die Lageraufnahme des Wischblatts eingebracht werden kann. Die Art der Gelenkverbindung mag allenfalls bei niedrigen Fahrgeschwindigkeiten und geringen Niederschlagsmengen als Regen zuverlässig funktionieren. Bei starkem Niederschlag und/oder hohen Fahrgeschwindigkeiten sowie bei Niederschlag als Schnee, insbesondere als Naßschnee, können die vom Wischblatt aus auf die Gelenkverbindung einwirkenden Kräfte das Haltevermögen des gummielastischen Kupplungsteils übersteigen und das Wischblatt vom Wischerarm lösen.

### Vorteile der Erfindung

Die erfindungsgemäße Wischvorrichtung, das erfindungsgemäße Kupplungsteil und das erfindungsgemäße Wischblatt mit den kennzeichnenden Merkmalen des Anspruchs 1 bzw. des Anspruchs 16 bzw. des Anspruchs 17 zeichnen sich durch eine einfache und betriebssichere Gelenkverbindung zwischen Wischerarm und Wischblatt aus. Zum Anschließen des Wischblatts an den Wischerarm wird dessen Gelenkbolzen unter vorübergehender elastischer Aufweitung der Engstelle in die Lageraufnahme des Wischblatts eingebracht, wobei das Sperrelement entgegen der Rückstellkraft in seine Öffnungsposition bewegt wird, so daß der Gelenkbolzen in seine Lageraufnahme gelangt. Danach bringt die Rückstellkraft das Sperrelement selbsttätig in dessen Sperrstellung. Das Sperrelement kann aus einem so steifen Material hergestellt sein, daß die auf die Gelenkstelle einwirkenden Betriebskräfte zwischen Wischblatt und Wischerarm ohne nachteilige Folgen für die Gelenkverbindung aufgenommen werden.

Ein einfacher Aufbau der Wischvorrichtung ergibt sich dadurch, daß das Kupplungsteil ein mit dem Wischblatt fest verbundenes Gehäuseteil hat, an welchem das Sperrelement in Längsrichtung des Wischblatts verschiebbar geführt ist.

Um einen besonders robusten Aufbau der Kupplung zum Anschließen des Wischblatts am Wischerarm zu erreichen, hat das Gehäuseteil zwei sich in Längsrichtung des Wischblatts erstreckende, mit Abstand voneinander angeordnete Führungswände, zwischen denen das Sperrelement verschiebbar geführt ist.

Wenn in weiterer Ausgestaltung der Erfindung die Lageraufnahme für den Gelenkbolzen des Wischerarms sowohl die beiden Führungswände als auch das Sperrelement durchdringt, wobei sich die dem Querschnitt des Gelenkbolzens angepaßten Ausformungen in den Führungswänden und in dem in Sperrstellung befindlichen Sperrelement, in Richtung der Gelenkachse gesehen, wenigstens annähernd zu einem Kreis ergänzen, ergibt sich eine betriebssichere, spielfreie Fixierung des wischerarmseitigen Gelenkbolzens im Kupplungsteil des Wischblatts und damit eine ruckfreie Bewegung des Wischblatts über die zu wischende Scheibe.

Damit das Wischblatt ohne Probleme auch von Nichtfachleuten an den Wischerarm angeschlossen werden kann, ist jeder der so gebildeten Lageraufnahmenabschnitte über je einen Durchführkanalabschnitt zu der von der Seite abgewandten Seite des Kupplungsteils offen, wobei die Breite eines jeden Durchführkanalabschnitts größer ist als der Durchmesser des Gelenkbolzens.

Vorzugsweise ist das Sperrelement durch sich am Gehäuseteil abstützende Federmittel zur Sperrstellung belastet. Dies kann auf kostengünstige Weise durch eine die Federmittel bildende Schraubendruckfeder erreicht werden.

Eine Vereinfachung der Montage des Kupplungsteils kann dadurch erreicht werden, daß die Federmittel durch eine einstückig mit dem aus einem elastischen Kunststoff bestehenden Gehäuseteil verbundene Schenkelfeder gebildet sind.

Wenn der Lagerabschnitt des Sperrelements mit einer Anlaufschräge versehen ist, welche dessen Ausformung mit Abstand gegenüberliegt und mit der Verschieberichtung des Sperrelements einen spitzen Winkel α einschließt, kann das Lösen des Wischblatts vom Wischerarm auf einfache Weise durch Verbringen des Sperrelements in seine Öffnungsstellung erreicht werden, wobei die Anlaufschräge den Gelenkbolzen aus den Lagerabschnitten in den Führungswänden drückt.

Eine auch auf Dauer stabile Führung des Sperrelements zwischen den beiden Führungswänden wird erreicht, wenn die beiden Führungswände am einen Endabschnitt des Gehäuseteils durch einen Steg miteinander verbunden sind.

Um Montagefehler beim Montieren des Sperrelements im Gehäuseteil zu vermeiden, hat das Gehäuseteil Mittel zum Sicherstellen einer definierten Arbeitsbewegung für das mit Abstand von der Wischleiste befindliche Sperrelement.

Diese Mittel können auf kostengünstige Weise durch wenigstens einen leistenartigen Vorsprung an der Innenseite einer Führungswand gebildet sein, welcher sich in Richtung der Arbeitsbewegung des Sperrelements erstreckt und dem eine auf den Querschnitt des Vorsprungs abgestimmte Längsnut an der dem Vorsprung zugewandten Seitenwange des Sperrelements zugeordnet ist.

Zur Sicherung des Sperrelements im Gehäuseteil ist an diesem eine entgegen der Arbeitsrichtung weisende Begrenzungsschulter angeordnet, welche mit einer am Sperrelement befindlichen Gegenschulter zusammenarbeitet.

Ein weiteres Mittel zur Erlangung einer spielfreien Führung des Wischblatts am Wischerarm kann dadurch erreicht werden, daß der Wischerarm wenigstens im Bereich des Gelenkbolzens zwei mit Abstand voneinander und parallel zueinander angeordnete Wangen hat, die zur Scheibe aufrecht angeordnet und an denen die Enden des Wischerarms festgelegt sind, wobei der Abstand zwischen den beiden Wangen auf die Breite des Kupplungsteils abgestimmt ist. Die beiden Wangen übergreifen somit spielfrei die voneinander abgewandten Außenseiten der beiden Führungswände großflächig.

Ein besonders niedrig und leicht bauendes Wischblatt wird erreicht, wenn das. Kupplungsteil an der von der Scheibe abgewandten, oberen Baufläche eines bandartig langgestreckten, federelastischen Tragelements gehalten ist, wobei es über wenigstens einen Teilabschnitt flächig an dieser anliegt und wenn weiter an der der Scheibe zugewandten unteren Bändfläche des Tragelements eine an der Scheibe anlegbare, gummielastische Wischleiste längsachsenparallel angeordnet ist.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

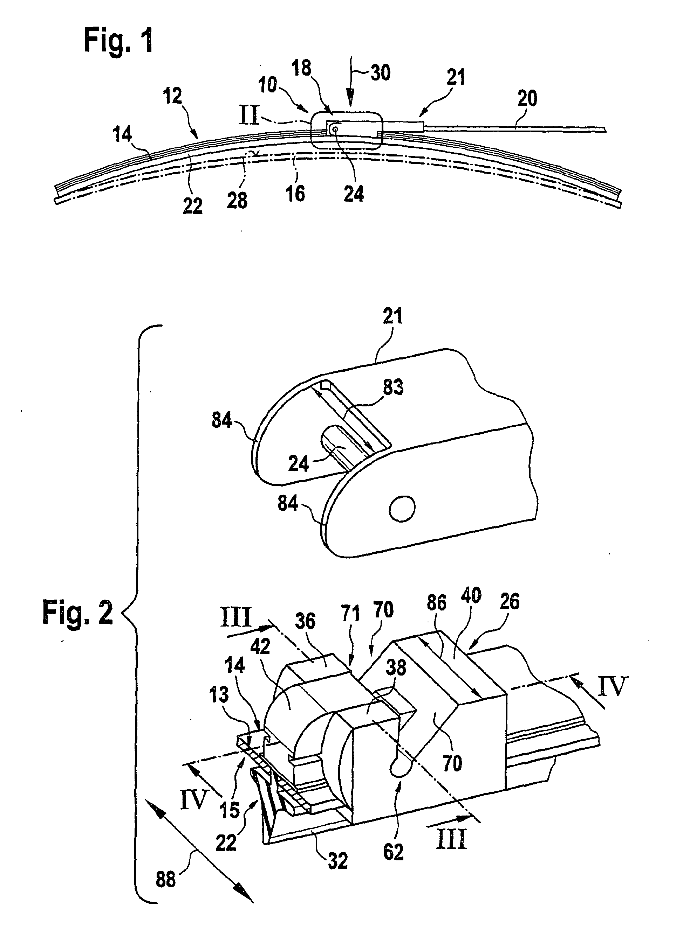

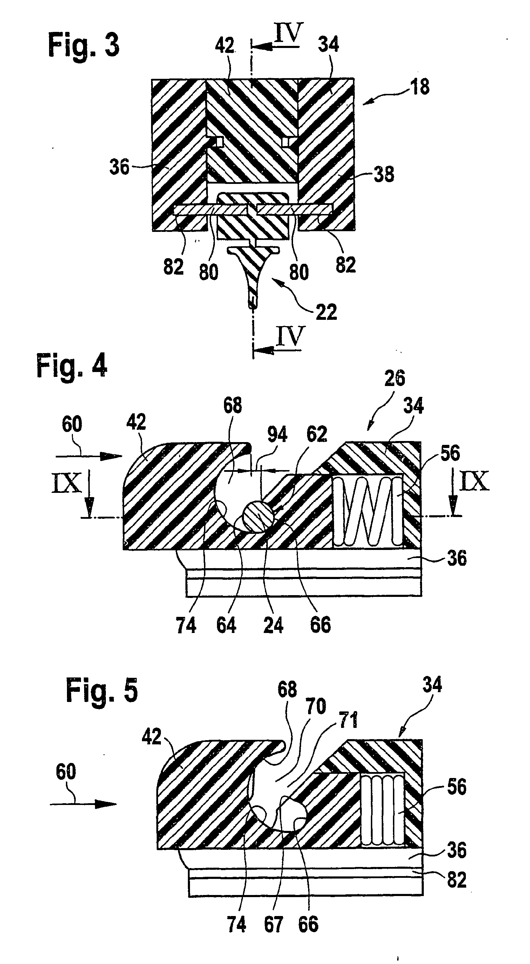

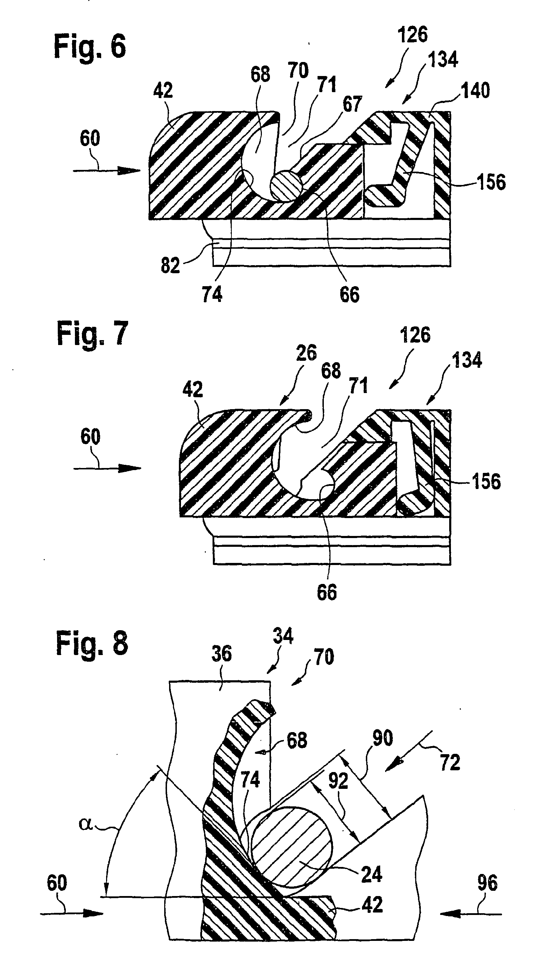

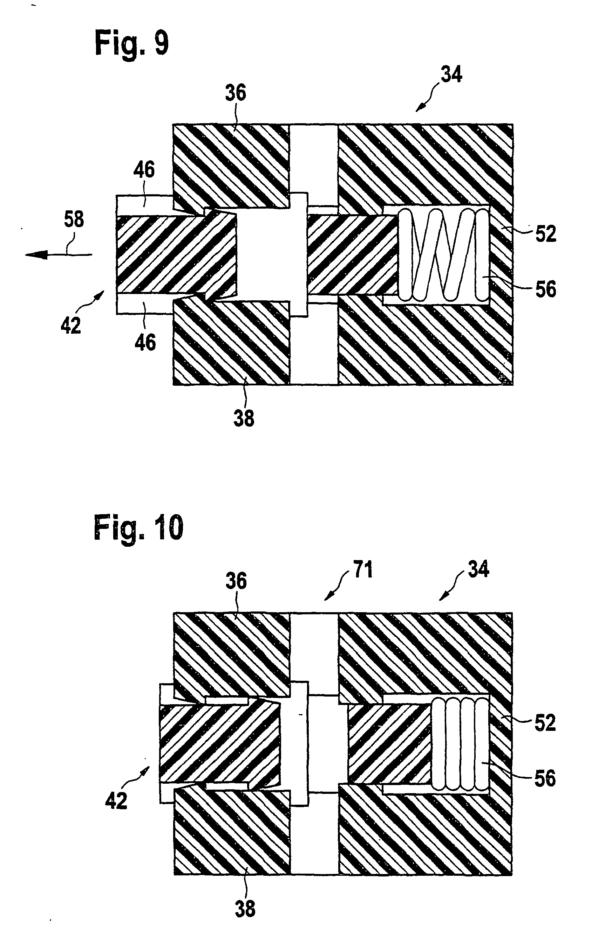

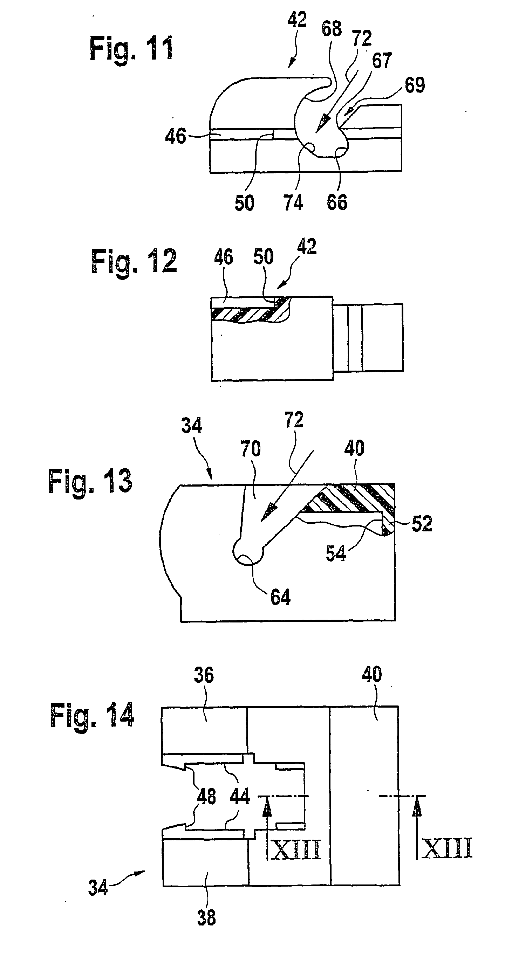

In der Zeichnung zeigen: Figur 1 die Prinzipdarstellung einer erfindungsgemäßen Wischvorrichtung in Seitenansicht, Figur 2 die perspektivische Darstellung einer in Figur 1 mit II bezeichneten Einzelheit, vergrößert und perspektivisch dargestellt, wobei das Wischblatt vom Wischerarm gelöst ist, Figur 3 einen Querschnitt durch das Wischblatt entlang der Linie III-III in Figur 2, Figur 4 einen Teil-Längsschnitt durch das in Anschlußposition befindliche Wischblatt entlang der Linie IV-IV in Figur 2, Figur 5 die Anordnung gemäß Figur 4 in Löseposition gezeichnet, Figur 6 eine andere Ausführung der Anordnung gemäß Figur 4, Figur 7 die Anordnung gemäß Figur 6 in Löseposition, Figur 8 eine vergrößerte Teildarstellung der Anordnungen gemäß den Figuren 4 und 6 in einer Zwischen-Löseposition, Figur 9 einen Schnitt entlang der Linie IX-IX in Figur 4, Figur 10 die Anordnung gemäß Figur 9 in der Position gemäß Figur 5, Figur 11 eine Seitenansicht eines zur Wischvorrichtung gehörenden Sperrschiebers, Figur 12 den Sperrschieber gemäß Figur 11 in Draufsicht teilweise geschnitten, Figur 13 eine Seitenansicht eines zur Wischvorrichtung gehörenden Kupplungsteils entlang der Linie XIII-XIII in Figur 14 teilweise geschnitten und Figur 13 das Kupplungsteil gemäß Figur 12 in Draufsicht.

### Beschreibung des Ausführungsbeispiels

Eine in den Figuren 1 und 2 dargestellte Wischvorrichtung 10 weist ein Wischblatt 12 mit einem bandartig langgestreckten, federelastischen Tragelement 14 auf. An der von der zu wischenden Scheibe 16 abgewandten oberen Bandfläche 13 des Tragelements ist eine am Tragelement flächig anliegende Anschlußvorrichtung 18 angeordnet, mit deren Hilfe das Wischblatt 12 mit einem einendig an der Karosserie eines Kraftfahrzeuges geführten, angetriebenen, zur Wischvorrichtung gehörenden Wischerarm 20 lösbar verbunden werden kann. An der der Scheibe 16 zugewandten unteren Bandfläche 15 des Tragelements 14 ist eine langgestreckte, gummielastische Wischleiste 22 längsachsenparallel angeordnet. An dem freien Ende 21 des Wischerarms 20 ist ein als armseitiges Kupplungsmittel dienender Gelenkbolzen 24 gehalten, welcher in einer Lageraufnahme eines wischblattseitigen Kupplungsteils 26 gelagert ist. Das freie Ende des Wischerarms 20 ist in Richtung des Pfeiles 30 zur zu wischenden Scheibe 16 belastet, deren zu wischende Oberfläche in Figur 1 durch eine strichpunktierte Linie 28 angedeutet ist. Da die strichpunktierte Linie 28 die stärkste Krümmung der Scheibenoberfläche darstellen soll, ist klar ersichtlich, daß die Krümmung des mit seinen beiden Enden an der Scheibe anliegenden Wischblatts 12 stärker ist als die maximale Scheibenkrümmung. Unter dem Anpreßdruck (Pfeil 30) legt sich das Wischblatt mit seiner Wischlippe 32 über seine gesamte Länge an der Scheibenoberfläche 28 an. Dabei baut sich im bandartigen federelastischen Tragelement 14 eine Spannung auf, welche für eine ordnungsgemäße Anlage der Wischleiste 22, bzw. der Wischlippe 32, über deren gesamte Länge an der Kraftfahrzeugscheibe 16 sorgt. Durch die Verwendung des Tragelements 14 erübrigt sich ein seit langem bekanntes Wischblatt-Tragbügelgestell (DE-PS 15 05 397).

Im folgenden soll nun auf die besondere Ausgestaltung der erfindungsgemäßen Wischvorrichtung 10 näher eingegangen werden. Das wischblattseitige Kupplungsteil 26 der Anschlußvorrichtung 18 ist zweiteilig aufgebaut. Es hat zum einen ein Gehäuseteil 34 (Figuren 13 und 14), mit zwei sich in Längsrichtung des Wischblatts 12 erstreckenden, parallel und mit Abstand voneinander angeordneten Führungswänden 36 und 38, die an ihrem einen Endabschnitt durch einen die Stabilität des Gehäuseteils sicherstellenden brückenartigen Steg 40 miteinander verbunden sind. Die beiden einander zugekehrten Innenseiten der Führungswände 36, 38 bilden Führungsflächen für ein schieberartiges Sperrelement 42 (Figuren 11 und 12), welches ebenfalls zum Kupplungsteil 26 gehört. Zum Sicherstellen einer definierten Arbeitsbewegung für den Sperrschieber 42 sind an den einander zugekehrten Innenseiten der Führungswände 36 und 38 jeweils ein sich in Längsrichtung des Wischblatts erstreckender leistenartiger Vorsprung 44 angeordnet. Zum Sicherstellen einer definierten Arbeitsbewegung sind den leistenartigen Vorsprüngen 44 am Sperrschieber 42 vorhandene, auf den Querschnitt der Vorsprünge 44 abgestimmte Längsnuten 46 zugeordnet. Somit kann das schieberartige Sperrelement 42 zwischen den Führungswänden 36 und 38 spiellos in Längsrichtung des Wischblatts verschoben werden. Zur Sicherung des Sperrschiebers 42 im Gehäuseteil 34 ist an jedem der beiden Vorsprünge 44 eine entgegen der Arbeitsbewegung weisende Begrenzungsschulter 48 angeordnet. Die beiden Begrenzungsschultern 48 arbeiten mit am Sperrschieber in dessen Längsnuten angeordneten Gegenschultern 50 im Sinne einer Begrenzung der Arbeitsbewegung zusammen. An dem mit dem Steg 40 versehenen Endabschnitt des Gehäuseteils 34 ist dieses mit einer Endwand 52 versehen, deren Innenseite 54 mit Abstand den Begrenzungsschultern 48 zugewandt ist. An der Innenseite 54 stützt sich eine Schraubendruckfeder 56 vorgespannt ab (Figuren 4 und 9), welche der in das Gehäuseteil 34 eingebaute Sperrschieber 42 in Richtung des Pfeiles 58 (Figur 9) schiebt, wobei die Begrenzungsschultern 48 den Sperrschieber 42 an dessen Gegenschultern 50 abfangen, wenn dieser seine Sperrstellung erreicht hat. Dabei befindet sich die Schraubendruckfeder 56 noch unter einer geringen Vorspannung. In einer in Figur 4 gezeigten Betriebsposition der Anschlußvorrichtung 18 liegen die Begrenzungsschultern 48 mit einem geringen Abstand von den Gegenschultern 50. Das bedeutet, daß der als Sperrelement dienende Sperrschieber 42 geringfügig in Richtung des Pfeiles 60 (Figur 4) entgegen der Arbeitsrichtung der Schraubendruckfeder 56 bewegt ist. In dieser Betriebsposition ist das Kupplungsteil 26 quer zur Bewegungsrichtung des Sperrschiebers 42 von einer bohrungsartigen Lageraufnahme für den Gelenkbolzen 24 durchdrungen. Die Lageraufnahme 62 durchdringt also beide Führungswände 36, 38 und den Sperrschieber 42. Zum besseren Verständnis ist in Figur 4 der Gelenkbolzen 24 im Schnitt eingezeichnet worden. Die sich dabei ergebenden Ausformungen in den Führungswänden 36, 38 ergänzen sich mit der sich ergebenden Ausformung 66 im Sperrschieber 42 in dessen Sperrstellung annähernd zu einem Kreis, welcher dem Querschnitt des Gelenkbolzens angepaßt ist. Damit der Sperrschieber aus seiner in Figur 4 dargestellten Betriebsposition in Richtung des Pfeiles 60 in eine Öffnungsposition (Figur 5) gebracht werden kann, ist er auf seiner der Ausformung 66 gegenüberliegenden Seite mit einer Aussparung 68 versehen. Die Aussparung ist so groß gewählt, daß sie einen Durchführkanalabschnitt für den Gelenkbolzen bildet. Ebenso sind die Ausformungen 64 in den Führungswänden 36, 38 über Durchführkanalabschnitte 70 trichterartig geöffnet (Figur 13). Die Breite der Durchführkanalabschnitte ist so gewählt, daß der Gelenkbolzen 24 problemlos in Richtung des Pfeiles 72 (Figur 13) in die wandseitigen Ausformungen 64 (Figur 13) in Richtung des Pfeiles 72 eingeführt werden kann. Infolge der entsprechend dimensionierten Aussparung 68 im Sperrschieber 42 kann der Gelenkbolzen 24 ebenfalls problemlos in die Lagerausformung 66 im Sperrschieber 42 gelangen (Figur 11). Dies ist jedoch nur dann möglich, wenn der Sperrschieber 42 in Richtung des Pfeiles 60 (Figur 5) entgegen der Spannkraft der Schraubendruckfeder 56 seine in Figur 5 dargestellte Öffnungsposition gebracht wird. In dieser Öffnungsposition ergibt sich ein Durchführkanal 71 für den Gelenkbolzen, der sich über die gesamte Breite des Gehäuseteils samt dem in diesem geführten Sperrschieber 42 erstreckt. Die so gebildeten, in Richtung der Achse des Gelenkbolzens 24 hintereinander angeordneten Lageraufnahmenabschnitte, welche durch die Ausformungen 64 bzw. 66 im Gehäuseteil 26 und durch die Aussparung 68, 69 im Sperrschieber 42 gebildet sind, sind somit zu der von der Scheibe abgewandten Seite des Kupplungsteils 26 offen. Die Breite eines jeden Abschnitts ist dabei größer als der Durchmesser des Gelenkbolzens. Die Ausformung 66 im Sperrschieber 42 ist mit einer Anlaufschräge 74 versehen, welche der Ausformung 66 mit Abstand gegenüberliegt und mit der Verschieberichtung des Sperrelements einen spitzen Winkel α einschließt (Figur 8).

Aus den Figuren 2 und 3 ist ersichtlich, daß das wischblattseitige Kupplungsteil 26 der Anschlußvorrichtung 18 an der oberen Bandfläche 13 des Tragelements 14 sitzend mit dem Tragelement 14 verbunden ist. Das Tragelement 14 hat im Bereich der Schnittlinie III-III zwei die Wischleiste fassende, mit Abstand voneinander liegende und parallel zueinander angeordnete Federschienen 80, deren Innenkanten in Längsnuten der Wischleiste 22 eintauchen und deren Außenkanten von in den Führungswänden 36 und 38 vorhandenen Längsnuten 82 gefaßt sind. Dabei ist die Anordnung der Wischleiste 22 so getroffen, daß diese nicht an dem Sperrschieber 42 anliegt und diesen in seiner Arbeitsbewegung beeinflußt. Wie aus Figur 2 ersichtlich ist, hat der Wischerarm 20 an seinem freien Ende 21 einen U-förmigen Querschnitt. Er hat somit zwei mit Abstand voneinander und parallel zueinander angeordnete Wangen, die zur Scheibe hin aufrecht angeordnet sind. An den Wangen 84 sind die beiden Enden des Gelenkbolzens 24 festgelegt. Der Abstand 83 zwischen den einander zugewandten Innenseiten der Wangen 84 ist so auf die Breite 85 des Gehäuseteils 34 abgestimmt, daß die Wangen 84 die Außenseiten der Führungswände 36, 38 spiellos übergreifen. Es ergibt sich somit eine vorzügliche Seitenführung für das Wischblatt am Wischerarm, wenn die Wischvorrichtung 10 in Richtung des Doppelpfeils 88 (Figur 2) über die zu wischende Scheibe bewegt wird.

Eine Alternative zu der schon geschilderten Anordnung einer Schraubendruckfeder ist in den Figuren 6 und 7 dargestellt. Da sich diese andere Ausführungsform lediglich durch die Ausgestaltung der Federmittel von der anhand der Figuren 4 und 5 beschriebenen Ausführungsform unterscheidet, werden hier die schon vorher für den Sperrschieber verwendeten Bezugszahlen übernommen. Das Kupplungsteil 126 gemäß den Figuren 6 und 7 hat ebenfalls ein Gehäuseteil 134 und einen Sperrschieber 42 mit den entsprechenden Lageraufnahmen 62, Durchführkanälen 71 und Aussparungen. Ebenso hat der Sperrschieber 42 eine Aussparung 68 mit der Anlaufschräge 74. Das Gehäuseteil 134 ist jedoch aus einem elastischen Kunststoff hergestellt. An den die beiden Führungswände 36 und 38 verbindenden Steg ist eine Schenkelfeder 156 angeformt, welche die Funktion der Schraubendruckfeder 56 bei der Ausführungsform gemäß den Figuren 4 und 5 übernimmt. Die Schenkelfeder 156 ist so abgestimmt, daß sie in der in Figur 6 dargestellten Betriebsposition (Sperrstellung) noch mit Vorspannung am Sperrschieber 42 anliegt. Wenn der Sperrschieber 42 in Richtung des Pfeiles 60 verschoben und seine in Figur 7 dargestellte Öffnungsposition gebracht wird, lenkt die Schenkelfeder 56 unter wachsender Spannung aus, so daß der Sperrschieber 42 die Durchführkanalabschnitte freigibt.

Die erfindungsgemäße Wischvorrichtung 10 hat also neben weiteren beschriebenen Merkmalen eine bohrungsartige Lageraufnahme 62 für den Gelenkbolzen 24, wobei die Lageraufnahme über einen entlang ihrer Mantelfläche in Richtung der Bohrungsachse ausgerichteten Durchführkanal 71 randoffen ist. Der Durchführkanal ist in drei verschiedene Abschnitte unterteilt, wobei sich jeweils ein Abschnitt 70 in den Führungswänden 36, 38 befindet und ein dritter Abschnitt 68, 69 im Sperrschieber 42 vorhanden ist. Die Durchführkanalabschnitte in den beiden Führungswänden 36 und 38 haben im Bereich der Lageraufnahme 62 eine Breite 90 (Figur 8), die etwas größer ist als der Durchmesser 92 des Gelenkbolzens 24.

Wenn das lose Wischblatt 12 an dem Wischerarm 20 angeschlossen werden soll, wird dieses in die in Figur 2 dargestellte Position gebracht. Danach wird das Wischblatt nach oben zum Gelenkbolzen 24 bewegt, wobei die trichterartige Ausformung 64 in den Führungswänden 36, 38 zusammen mit den an den Außenseiten der Führungswände in Richtung des Pfeiles 72 (Figur 8) entlang gleitenden Wangen 84 des Wischerarmendes 21 eine sehr gute Montagehilfe bieten. Bei dieser Montagebewegung wird der Sperrschieber 42 durch den Gelenkbolzen 24 in Richtung des Pfeiles 60 - unter Erhöhung der Spannung der Federmittel 56 bzw. 156 - soweit verschoben, bis der Gelenkbolzen 24 in seine Lageraufnahme 62 - gebildet durch die Ausformungen 64 und 66 - gelangt (Öffnungsstellung). Danach schnappt der Sperrschieber unter der Wirkung der nun erheblich vorgespannten Federmittel 56 bzw. 156 in seine in Figur 4 dargestellte Betriebsposition. Der Sperrschieber 42 verengt nun mit der Oberkante 67 seiner Ausformung 66 den Durchführkanal auf eine Engstelle 94 (Figur 4), deren Breite kleiner ist als der Durchmesser des Gelenkbolzens 24, so daß das Wischblatt 12 nicht mehr vom Wischerarm 20 gelöst werden kann (Sperrstellung). Der Gelenkbolzen ist dann praktisch von Teilen des Kupplungsteils 24 umschlossen.

Zum Lösen des Wischblatts 12 vom Wischerarm 20 muß der Sperrschieber 42 unter elastischer Aufweitung der Engstelle 94 in Richtung des Pfeiles 60 bewegt werden, wobei die Anlaufschräge 74 des Sperrschiebers 42 am Gelenkbolzen 24 anschlägt und diesen aus seiner Lageraufnahme 62 hebt, so wie dies in Figur 8 dargestellt ist. Wie Figur 8 weiter zeigt, ist in dieser Position die Engstelle 94 schon so aufgeweitet, daß deren Breite 90 schon etwas größer ist als der Durchmesser 92 des Gelenkbolzens 24 (Öffnungsstellung). Danach kann das Wischblatt ohne weiteres entgegen der Richtung des Pfeiles 72 vom Gelenkbolzen und damit vom Wischerarm gelöst werden. Die Wischvorrichtung zeichnet sich somit dadurch aus, daß zur Bildung der Engstelle 94 das Kupplungsteil 26 mit einem separaten Sperrelement 42 versehen ist, das entgegen einer Rückstellkraft (Pfeil 96) aus seiner den Durchführkanal sperrenden Sperrstellung - die der Betriebsposition entspricht - in eine den Durchführkanal freigebende Öffnungsposition (Figuren 5 bzw. 8) bringbar ist.

## Patentansprüche

1. Wischvorrichtung, insbesondere für Scheiben von Kraftfahrzeugen, mit einem einendig am Kraftfahrzeug geführten, angetriebenen Wischerarm (20), an dessen freiem Ende (21) ein mit einer Wischleiste (22) an der Scheibe (16) anlegbares, langgestrecktes Wischblatt (12) über eine Anschlußvorrichtung (18) lösbar angelenkt ist, welche armseitig einen Gelenkbolzen (24) hat, dessen Gelenkachse sich im wesentlichen quer zur Längsrichtung des Wischblatts in Arbeitsrichtung (Doppelpfeil 88) der Wischvorrichtung (10) erstreckt und die wischblattseitig in einem mittleren Abschnitt des Wischblatts an dessen von der Scheibe abgewandten Seite ein Kupplungsteil (26) mit einer bohrungsartigen Lageraufnahme (62) für den Gelenkbolzen (24) aufweist, wobei die Lageraufnahme (62) über einen entlang ihrer Mantelfläche in Richtung der Bohrungsachse ausgerichteten Durchführkanal (70) für den Gelenkbolzen randoffen und mit einer auf den Durchmesser (92) des Gelenkbolzens elastisch aufweitbaren Engstelle (94) versehen ist, deren Breite kleiner ist als der Durchmesser der Lageraufnahme, **dadurch gekennzeichnet, daß** zur Bildung der Engstelle das Kupplungsteil (26) mit einem separaten Sperrelement (42) versehen ist, das entgegen einer Rückstellkraft (96) aus seiner den Durchführkanal (70) sperrenden Sperrstellung in eine den Durchführkanal freigebende Öffnungsposition bringbar ist

2. Wischvorrichtung nach Anspruch 1, **dadurch gekennzeichnet, daß** das Kupplungsteil (26) ein mit dem Wischblatt (12) fest verbundenes Gehäuseteil (34) hat, an welchem das Sperrelement (42) in Längsrichtung des Wischblatts (12) verschiebbar geführt ist.

3. Wischvorrichtung nach Anspruch 2, **dadurch gekennzeichnet, daß** das Gehäuseteil (34) zwei sich in Längsrichtung des Wischblatts erstreckende, mit Abstand voneinander angeordnete Führungswände (36, 38) hat, zwischen denen das Sperrelement (42) verschiebbar geführt ist.

4. Wischvorrichtung nach einem der Ansprüche 1 bis 3, **dadurch gekennzeichnet, daß** die Lageraufnahme (62) für den Gelenkbolzen (24) des Wischerarms (20) sowohl die beiden Führungswände (36, 38) als auch das Sperrelement (42) durchdringt, wobei sich die dem Querschnitt des Gelenkbolzens angepaßte Ausformungen (64, 66) in den Führungswänden und in dem in Sperrstellung befindlichen Sperrelement, in Richtung der Gelenkachse gesehen, wenigstens annähernd zu einem Kreis ergänzen.

5. Wischvorrichtung nach Anspruch 4, **dadurch gekennzeichnet, daß** jeder der so gebildeten Lageraufnahmenabschnitte über je einen Durchführkanalabschnitt zu der von der Scheibe abgewandten Seite des Kupplungsteils (26) offen ist, wobei die Breite eines jeden Abschnitts größer ist als der Durchmesser des Gelenkbolzens (24).

6. Wischvorrichtung nach Anspruch 5, **dadurch gekennzeichnet, daß** das Sperrelement (42) durch sich am Gehäuseteil (34) abstützende Federmittel (56 bzw. 156) zur Sperrstellung belastet ist.

7. Wischvorrichtung nach Anspruch 6, **dadurch gekennzeichnet, daß** die Federmittel durch eine Schraubendruckfeder (56) gebildet sind.

8. Wischvorrichtung nach Anspruch 6, **dadurch gekennzeichnet, daß** die Federmittel durch eine einstückig mit dem aus einem elastischen Kunststoff bestehenden Gehäuseteil (134) verbundene Schenkelfeder (156) gebildet sind.

9. Wischvorrichtung nach einem der Ansprüche 4 bis 8,**dadurch gekennzeichnet, daß** der Lagerabschnitt des Sperrelements (66) mit einer Anlaufschräge (74) versehen ist, welche dessen Ausformung (66) mit Abstand gegenüberliegt und mit der Verschieberichtung (60) des Sperrelements einen spitzen Winkel (α) einschließt.

10. Wischvorrichtung nach einem der Ansprüche 3 bis 9, **dadurch gekennzeichnet, daß** die beiden Führungswände (36, 38) am einen Endabschnitt des Gehäuseteils (34) durch einen Steg (40) miteinander verbunden sind.

11. Wischvorrichtung nach einem der Ansprüche 2 bis 10, **dadurch gekennzeichnet, daß** das Gehäuseteil (34) mit Mitteln (44) zum Sicherstellen einer definierten Arbeitsbewegung für das mit Abstand von der Wischleiste (22) befindliche Sperrelement (42) versehen ist.

12. Wischvorrichtung nach Anspruch 11, **dadurch gekennzeichnet, daß** die Sicherungsmittel durch wenigstens einen leistenartigen Vorsprung (44) an der Innenseite einer Führungswand (36, 38) gebildet sind, der sich in Richtung der Arbeitsbewegung des Sperrelements (42) erstreckt und dem eine auf den Querschnitt des Vorsprungs (44) abgestimmte Längsnut (46) an der dem Vorsprung zugewandten Seitenwange des Sperrelements (42) zugeordnet ist.

13. Wischvorrichtung nach einem der Ansprüche 11 oder 12, **dadurch gekennzeichnet, daß** an dem Gehäuseteil (26) eine entgegen der Arbeitsbewegung weisende Begrenzungsschulter (48) angeordnet ist, die mit einer am Sperrelement (42) befindlichen Gegenschulter (50) zusammenarbeitet.

14. Wischvorrichtung nach einem der Ansprüche 1 bis 13, **dadurch gekennzeichnet, daß** der Wischerarm (20) wenigstens im Bereich des Gelenkbolzens (24) zwei mit Abstand voneinander und parallel zueinander angeordnete Wangen (84) hat, die zur Scheibe (16) aufrecht angeordnet und an denen die Enden des Gelenkbolzens (24) festgelegt sind und der Abstand (83) zwischen den beiden Wangen auf die Breite (85) des Kupplungsteils (26) abgestimmt ist.

15. Wischvorrichtung nach einem der Ansprüche 1 bis 14, **dadurch gekennzeichnet, daß** das Kupplungsteil (26) an der von der Scheibe (16) abgewandten, oberen Bandfläche eines Tragelements gehalten ist, wobei es wenigstens über einen Teilabschnitt flächig an dieser anliegt und an der anderen, der Scheibe zugewandten unteren Bandfläche (15) des Tragelements (14) eine an der Scheibe anlegbare, gummielastische Wischleiste (22) längsachsenparallel angeordnet ist.

16. Kupplungsteil zum Kuppeln eines Wischerarms mit einem Wischblatt, insbesondere für eine Wischvorrichtung nach einem der vorhergehenden Ansprüchen,
wobei der Wischerarm einen Gelenkbolzen (24) hat, dessen Gelenkachse sich im wesentlichen quer zur Längsrichtung des Wischblatts erstreckt,
mit einer bohrungsartigen Lageraufnahme (62) für den Gelenkbolzen (24), wobei die Lageraufnahme (62) über einen entlang ihrer Mantelfläche in Richtung der Bohrungsachse ausgerichteten Durchführkanal (70) für den Gelenkbolzen randoffen ist und der Durchführkanal mit einer auf den Durchmesser (92) des Gelenkbolzens elastisch aufweitbaren Engstelle (94) versehen ist, deren Breite kleiner ist als der Durchmesser der Lageraufnahme,
**dadurch gekennzeichnet,**
**daß** zur Bildung der Engstelle das Kupplungsteil (26) mit einem separaten Sperrelement (42) versehen ist, das entgegen einer Rückstellkraft (96) aus seiner den Durchführkanal (70) sperrenden Sperrstellung in eine den Durchführkanal freigebende Öffnungsposition bringbar ist.

17. Wischblatt, insbesondere für Scheiben von Kraftfahrzeugen, mit einer an der Scheibe (16) anlegbaren Wischleiste (22) und einer Anschlussvorrichtung (18) zum lösbaren Anlenken an einen Wischerarm, welcher einen Gelenkbolzen (24) hat, dessen Gelenkachse sich im wesentlichen quer zur Längsrichtung des Wischblatts in Arbeitsrichtung (88) der Wischvorrichtung (10) erstreckt, wobei die Anschlussvorrichtung (18) wischblattseitig in einem mittleren Abschnitt des Wischblatts an dessen von der Scheibe abgewandten Seite ein Kupplungsteil (26) mit einer bohrungsartigen Lageraufnahme (62) für den Gelenkbolzen (24) aufweist, wobei die Lageraufnahme (62) über einen entlang ihrer Mantelfläche in Richtung der Bohrungsachse ausgerichteten Durchführkanal (70) für den Gelenkbolzen randoffen und mit einer auf den Durchmesser (92) des Gelenkbolzens elastisch aufweitbaren Engstelle (94) versehen ist, deren Breite kleiner ist als der Durchmesser der Lageraufnahme, **dadurch gekennzeichnet, dass** zur Bildung der Engstelle das Kupplungsteil (26) mit einem separaten Sperrelement (42) versehen ist, das entgegen einer Rückstellkraft (96) aus seiner den Durchführkanal (70) sperrenden Sperrstellung in eine den Durchführkanal freigebende Öffnungsposition bringbar ist, insbesondere zur Verwendung in einer Wischvorrichtung nach einem der Ansprüche 1 bis 15.

## Claims

1. Wiping device, in particular for windows of motor vehicles, having a driven wiper arm (20) which is guided at one end on the motor vehicle and at the free end (21) of which an elongated wiper blade (12) which can be placed with a wiper strip (22) against the window (16) is coupled detachably via a connecting device (18) which has, on the arm side, a hinge pin (24), the hinge axis of which extends essentially transversely with respect to the longitudinal direction of the wiper blade in the operating direction (double arrow 88) of the wiping device (10) and which has, on the wiper blade side, in a central section of the wiper blade, on the side thereof which faces away from the window, a coupling part (26) having a hole-type bearing holder (62) for the hinge pin (24), the bearing holder (62) being open at the edge via a through-channel (70), which is orientated along its circumferential surface in the direction of the hole axis and is intended for the hinge pin, and being provided with a narrow point (94) which can extend elastically to the diameter (92) of the hinge pin, the width of which is smaller than the diameter of the bearing holder, **characterized in that**, in order to form the narrow point, the coupling part (26) is provided with a separate blocking element (42) which can be brought counter to a restoring force (96) from its blocking position blocking the through-channel (70) into an opening position releasing the through-channel.

2. Wiping device according to Claim 1, **characterized in that** the coupling part (26) has a housing part (34) which is connected fixedly to the wiper blade (12) and on which the blocking element (42) is guided displaceably in the longitudinal direction of the wiper blade (12).

3. Wiping device according to Claim 2, **characterized in that** the housing part (34) has two guide walls (36, 38) which extend in the longitudinal direction of the wiper blade, are arranged at a distance from each other and between which the blocking element (42) is guided displaceably.

4. Wiping device according to one of Claims 1 to 3, **characterized in that** the bearing holder (62) for the hinge pin (24) of the wiper arm (20) penetrates the two guide walls (36, 38) and the blocking element (42), the shaped-out portions (64, 66), which are matched to the cross section of the hinge pin, in the guide walls and in the blocking element situated in the blocking position being at least approximately completed to form a circle, seen in the direction of the hinge axis.

5. Wiping device according to Claim 4, **characterized in that** each of the bearing-holder sections formed in this manner is open, via a respective through-channel section, to that side of the coupling part (26) which faces away from the window, the width of each section being greater than the diameter of the hinge pin (24).

6. Wiping device according to Claim 5, **characterized in that** the blocking element (42) is loaded towards the blocking position by spring means (56 or 156) supported on the housing part (34).

7. Wiping device according to Claim 6, **characterized in that** the spring means are formed by a helical compression spring (56).

8. Wiping device according to Claim 6, **characterized in that** the spring means are formed by a leg spring (156) connected in one piece to the housing part (134) which consists of a flexible plastic.

9. Wiping device according to one of Claims 4 to 8, **characterized in that** the bearing section of the blocking element (42) is provided with a run-on slope (74) which is spaced apart opposite the shaped-out portion (66) of the said bearing section and encloses an acute angle (α) with the displacement direction (60) of the blocking element.

10. Wiping device according to one of Claims 3 to 9, **characterized in that** the two guide walls (36, 38) are connected to each other by a web (40) at the one end section of the housing part (34).

11. Wiping device according to one of Claims 2 to 10, **characterized in that** the housing part (34) is provided with means (44) for ensuring a defined operating movement for the blocking element (42), which is situated at a distance from the wiper strip (22).

12. Wiping device according to Claim 11, **characterized in that** the securing means are formed by at least one strip-like projection (44) on the inside of a guide wall (36, 38), the said projection extending in the direction of the operating movement of the blocking element (42) and being assigned a longitudinal groove (46), which is co-ordinated with the cross section of the projection (44), on that side cheek of the blocking element (42) which faces the projection.

13. Wiping device according to one of Claims 11 or 12, **characterized in that** a boundary shoulder (48) pointing counter to the operating movement is arranged on the housing part (26) and interacts with a mating shoulder (50) situated on the blocking element (42).

14. Wiping device according to one of Claims 1 to 13, **characterized in that** the wiper arm (20) has, at least in the region of the hinge pin (24), two cheeks (84) which are spaced apart from each other, are arranged parallel to each other, are arranged upright with respect to the window (16) and on which the ends of the hinge pin (24) are secured, and the distance (83) between the two cheeks is co-ordinated with the width (85) of the coupling part (26).

15. Wiping device according to one of Claims 1 to 14, **characterized in that** the coupling part (26) is held against the upper band surface of a supporting element, which band surface faces away from the window (16), the said coupling part bearing, at least over a subsection, flat against the said band surface, and a rubber-elastic wiper strip (22) which can be placed against the window being arranged parallel to the longitudinal axis on the other, lower band surface (15) of the supporting element (14), which surface faces the window.

16. Coupling part for coupling a wiper arm to a wiper blade, in particular for a wiping device according to one of the preceding claims, the wiper arm having a hinge pin (24), the hinge axis of which extends essentially transversely with respect to the longitudinal direction of the wiper blade, having a hole-type bearing holder (62) for the hinge pin (24), the bearing holder (62) being open at the edge via a through-channel (70), which is orientated along its circumferential surface in the direction of the hole axis and is intended for the hinge pin, and the through-channel being provided with a narrow point (94) which can expand elastically to the diameter (92) of the hinge pin and the width of which is smaller than the diameter of the bearing holder, **characterized in that**, in order to form the narrow point, the coupling part (26) is provided with a separate blocking element (42) which can be brought counter to a restoring force (96) from its blocking position blocking the through-channel (70) into an opening position releasing the through-channel.

17. Wiper blade, in particular for windows of motor vehicles, having a wiper strip (22) which can be placed against the window (16) and a connecting device (18) for detachable coupling to a wiper arm, which has a hinge pin (24), the hinge axis of which extends essentially transversely with respect to the longitudinal direction of the wiper blade in the operating direction (88) of the wiping device (10), the connecting device (18) having, on the wiper blade side, in a central section of the wiper, blade, on the side thereof which faces away from the window, a coupling part (26) having a hole-type bearing holder (62) for the hinge pin (24), the bearing holder (62) being open at the edge via a through-channel (70), which is orientated along its circumferential surface in the direction of the hole axis and is intended for the hinge pin, and being provided with a narrow point (94) which can extend elastically to the diameter (92) of the hinge pin, the width of which is smaller than the diameter of the bearing holder, **characterized in that**, in order to form the narrow point, the coupling part (26) is provided with a separate blocking element (42) which can be brought counter to a restoring force (96) from its blocking position blocking the through-channel (70) into an opening position releasing the through-channel, in particular for use in a wiping device according to one of Claims 1 to 15.

## Revendications

1. Dispositif d'essuyage notamment de vitre de véhicules automobiles, comportant un bras d'essuie-glace (20) entraîné, dont une extrémité est guidée au niveau du véhicule et dont l'extrémité libre (21) est articulée de manière amovible à un balai d'essuie-glace (12), allongé, muni d'une lame d'essuyage (22) s'appliquant contre la vitre (16) par l'intermédiaire d'un dispositif d'accouplement (18), ayant un goujon d'articulation (24) du côté du bras dont l'axe d'articulation est dirigé principalement transversalement à la direction longitudinale du balai d'essuie-glace dans la direction de travail (double flèche 88) du dispositif d'essuyage (10) et qui comporte du côté du balai d'essuie-glace, dans un segment central du balai d'essuie-glace, sur son côté non tourné vers la vitre, une pièce d'accouplement (26) munie d'un logement de palier (62) en forme de perçage pour le goujon d'articulation (24),
le logement de palier (62) étant ouvert pour le goujon d'articulation par un canal de passage (70) aligné le long de la surface enveloppe dans la direction de l'axe du perçage et muni d'un rétrécissement (94) s'élargissant élastiquement au diamètre (92) du goujon d'articulation, rétrécissement dont la largeur est inférieure au diamètre du logement de palier,
**caractérisé en ce que**
pour former le rétrécissement, la pièce d'accouplement (26) est munie d'un élément de verrouillage (42), séparé, qui peut être mis contre une force de rappel (96), de sa position de blocage du canal de passage (70) dans une position d'ouverture libérant le canal de passage.

2. Dispositif d'essuyage selon la revendication 1,
**caractérisé en ce que**
la pièce d'accouplement (26) comporte une pièce de boîtier (34) reliée solidairement au balai d'essuie-glace (12) et guidant l'élément de verrouillage (42) de façon coulissante dans la direction longitudinale du balai d'essuie-glace (12).

3. Dispositif d'essuyage selon la revendication 2,
**caractérisé en ce que**
la partie de boîtier (34) comporte deux parois de guidage (36, 38) écartées l'une de l'autre et s'étendant dans la direction longitudinale du balai d'essuie-glace et entre lesquelles peut coulisser l'élément de verrouillage (42).

4. Dispositif d'essuyage selon l'une des revendications 1 à 3,
**caractérisé en ce que**
le logement de palier (62) du goujon d'articulation (24) du bras d'essuie-glace (20) traverse à la fois les deux parois de guidage (36, 38) et aussi l'élément de verrouillage (42), et les formes (64, 66) adaptées à la section du goujon d'articulation dans les parois de guidage et dans l'élément de verrouillage en position de verrouillage, se complètent au moins approximativement en une forme de cercle dans la direction de l'axe d'articulation.

5. Dispositif d'essuyage selon la revendication 4,
**caractérisé en ce que**
chacun des segments de logement de palier ainsi formé est ouvert chaque fois par un segment de canal de passage vers le côté de la pièce d'accouplement (26) non tournée vers la vitre, la largeur de chaque segment étant supérieure au diamètre de l'axe d'articulation (24).

6. Dispositif d'essuyage selon la revendication 5 ?
**caractérisé en ce que**
l'élément de verrouillage (42) est sollicité par des moyens de ressort (56, 156) s'appuyant contre la partie de boîtier (34) vers la position de verrouillage.

7. Dispositif d'essuyage selon la revendication 6,
**caractérisé en ce que**
les moyens de ressort sont formés par un ressort hélicoïdal de compression (56).

8. Dispositif d'essuyage selon la revendication 6,
**caractérisé en ce que**
les moyens de ressort sont formés par un ressort (156) à branches, reliés en une seule pièce à la partie de boîtier (134) en matière plastique élastique.

9. Dispositif d'essuyage selon l'une des revendications 4 à 8,
**caractérisé en ce que**
le segment de palier de l'élément de verrouillage (42) est muni d'une rampe d'attaque (74) écartée, et formant un angle aigu (α) avec la direction de coulissement (60) de l'élément de verrouillage.

10. Dispositif d'essuyage selon l'une des revendications 3 à 9,
**caractérisé en ce que**
les deux parois de guidage (36, 38) sont reliées l'une à l'autre par une entretoise (40) au niveau d'un segment d'extrémité de la partie de boîtier (34).

11. Dispositif d'essuyage selon l'une des revendications 2 à 10,
**caractérisé en ce que**
la partie de boîtier (34) est munie de moyens (44) pour garantir un mouvement actif défini à l'élément de verrouillage (42) qui se trouve à distance de la lame d'essuyage (22).

12. Dispositif d'essuyage selon la revendication 11,
**caractérisé en ce que**
les moyens de fixation sont formés par au moins une partie en saillie (44) en forme de longeron sur le côté intérieur d'une paroi de guidage (36, 38), cette partie en saillie s'étend en direction du mouvement actif de l'élément de verrouillage (42) et est associée à une rainure longitudinale (46) accordée en fonction de la section de la partie en saillie (44) sur les joues latérales de l'élément de verrouillage (42) tournées vers la partie en saillie.

13. Dispositif d'essuyage selon l'une des revendications 11 ou 12,
**caractérisé en ce que**
la partie de boîtier (26) comporte un épaulement de limitation (48) dirigé dans la direction opposée au mouvement actif, et coopérant avec un contre-épaulement (50) de l'élément de verrouillage (42).

14. Dispositif d'essuyage selon l'une des revendications 1 à 13,
**caractérisé en ce que**
le bras d'essuie-glace (20) comporte au moins au niveau du goujon d'articulation (24), deux joues écartées l'une de l'autre et parallèles, perpendiculaires à la vitre (16) et dont les extrémités fixent le goujon d'articulation (24), et la distance (83) entre les deux joues est définie en fonction de la largeur (85) de la pièce d'accouplement (26).

15. Dispositif d'essuyage selon l'une des revendications 1 à 14,
**caractérisé en ce que**
la pièce d'accouplement (26) est tenue contre la surface de bande supérieure d'un élément de support non tourné vers la vitre (16), et
cette pièce s'appuie au moins par un segment partiel, en surface contre celui-ci et l'autre surface de bande (15) de l'élément de support (14), inférieur, tourné vers la vitre, comporte une lame d'essuyage (22) élastique comme du caoutchouc, parallèle à l'axe longitudinal et susceptible de s'appliquer contre la vitre.

16. Pièce d'accouplement pour associer un bras d'essuie-glace à un balai d'essuie-glace notamment pour un dispositif d'essuie-glace selon l'une des revendications précédentes, selon lequel, le bras d'essuie-glace comporte un goujon d'articulation (24) dont l'axe d'articulation s'étend principalement transversalement à la direction longitudinale du balai d'essuie-glace,
ayant un logement de palier (62) en forme de perçage pour le goujon d'articulation (24), le logement de palier (62) ayant un bord ouvert pour recevoir le goujon d'articulation, dirigé suivant sa surface enveloppe dans la direction de l'axe de perçage, et le canal de passage ayant un rétrécissement (94) qui peut être élargi élastiquement jusqu'au diamètre (92) du goujon d'articulation et dont la largeur est inférieure au diamètre du logement de palier,
**caractérisée en ce que**
pour former le rétrécissement, la pièce d'accouplement (26) est munie d'un élément de verrouillage (42) distinct, qui peut être mis en agissant contre une force de rappel (96) d'une position de verrouillage qui bloque le canal de passage (70) dans une position d'ouverture libérant le canal de passage.

17. Balai d'essuie-glace notamment pour vitres de véhicules automobiles comportant une lame d'essuyage (22) s'appliquant contre la vitre (16) et un dispositif d'accouplement (18) pour être articulé de manière amovible à un bras d'essuie-glace ayant un goujon d'articulation (24) dont l'axe d'articulation s'étend principalement transversalement à la direction longitudinale du balai d'essuie-glace dans la direction active (88) du dispositif d'essuyage (10),
le dispositif d'accouplement (18) ayant du côté du balai d'essuie-glace, dans un segment central du balai d'essuie-glace, et sur son côté non tourné vers la vitre, une pièce d'accouplement (26) munie d'un logement de palier (62) en forme de perçage pour recevoir le goujon d'articulation (24),
le logement de palier (62) ayant un bord ouvert par un canal de passage (70) aligné suivant sa surface enveloppe dans la direction de l'axe du perçage pour recevoir le goujon d'articulation et un rétrécissement (94) qui peut être élargi élastiquement jusqu'au diamètre (92) du goujon d'articulation, et dont la largeur est inférieure au diamètre du logement de palier,
**caractérisé en ce que**
pour former le rétrécissement, la pièce d'accouplement (26) est munie d'un élément de verrouillage (42) distinct, qui peut être mis, en agissant contre une force de rappel (96), de sa position de verrouillage qui bloque le canal de passage (70) dans une position de libération dégageant le canal de passage, notamment appliqué à un dispositif d'essuie-glace selon l'une des revendications 1 à 15.
